# EUROPÄISCHE PATENTANMELDUNG

(11) **EP 1 544 814 A1**
(43) Veröffentlichungstag der Anmeldung: **22.06.2005**
(21) Anmeldenummer: 03029454.0
(22) Anmeldetag: 19.12.2003
(51) Int. Cl.: G07F 19/00, G06F 17/00, H04L 29/06

(54) **Verfahren zur Vergebührung eines Dienstes in einem Kommunikationsnetz**

(71) Anmelder: SIEMENS AKTIENGESELLSCHAFT, 80333 München (DE)
(72) Erfinder: Held, Walter, 82538 Geretsried (DE)

(57) **Zusammenfassung**

Das beschriebene Verfahren erlaubt dem Betreiber eines Stateless Proxy bzw. Application Brokers auf einfache Art und Weise registrierten Application Service Anbietern und registrierten Kunden eine zuverlässige, in definierbaren Intervallen genaue und vertrauenswürdige Vergebührungsfunktion anzubieten, indem sich während der Diensterbringung Client und Server ständig im Hintergrund in regelmäßigen Abständen über einen unabhängigen Dritten (Billing Server) über die dafür anfallenden Gebühren verständigen und die Vergebührungsfunktion auch von dem unabhängigen Dritten erbracht wird.

## Beschreibung

### Problemstellung der Erfindung

In einem paketorientierten Kommunikationsnetz mit Dienstanwendern (z.B. SIP-Clients), Diensterbringern (z.B. Applikations-Servern) und einem vermittelnden Applikationsbroker (z.B. SIP Proxy), der für die Dauer der Servicebeziehung zwischen einem Client und einem Application Server nicht in diese Beziehung eingebunden ist, (d.h. z.B. kein Stateful SIP-Proxy), ist es für den Proxy unmöglich eine zuverlässige Vergebührungsfunktion für registrierte Kunden (Anwender und Diensteanbieter) bereitzustellen. Aus Gründen der Effizienz (Hardware- und Betriebskosten), ist es für große Netzkonfigurationen mit einer Vielzahl von Proxies von Vorteil, wenn eine Vergebührungseinheit mit mehreren Proxies im Netz gleichzeitig zusammenarbeiten kann.

### Bisherige Lösungen der Problemstellung

- Proxy bleibt in der Kommunikationsbeziehung für die Dauer der Servicebeziehung (Stateful Proxy), oder
- Vergebührung läuft separat zwischen Application Server und Client ohne Einbeziehung des Proxies, d.h. der Betreiber des Proxies ist ausschließlich Access-Provider. Eine Gesamtrechnung aus einer Hand auch für in Anspruch genommene Dienste lassen sich - wenn überhaupt - dann nur mit großem Aufwand im Postprocessing erreichen -> Verteilte Billingfunktionen beim Proxy-Betreiber und beim Application Server Provider;
Erfordert (a) Sicherstellung, daß der Nutzer eines Services auch gleichzeitig Kunde von Proxy- und Serverbetreiber ist, und (b) Übermittlung von Daten an den zentralen Rechnungsersteller.

### Lösung der Problemstellung gemäß der Erfindung

Die Erfindung beschreibt ein Verfahren, wie in einem derartigen Scenario mit Client, Proxy (=Applikationsbroker, Applikationsvermittlungseinrichtung), Vergebührungseinheit (Billing Server) und Applikationsserver eine für alle Partner zuverlässige Vergebührung erreicht werden kann, die zudem für den Anbieter (Provider) des Grunddienstes (Betreiber der Proxies und des Billing Server) einen Mehrwertdienst darstellt. Dieser Provider ist damit in der Lage, seinem Endkunden eine zuverlässige Rechnung aus einer Hand mit paketorientierten Diensten von unterschiedlichsten Partner-Serviceprovidern anzubieten. Dabei kann der Grunddienstanbieter sowohl als einfacher Vermittler eines Dienstes, als auch als Zwischenhändler mit "Rebranding" auftreten (Unter "Rebranding" wird hierbei verstanden, dass der Betreiber des Proxy einen Dienst eines Partner-Serviceprovider nicht unter dem ursprünglichen Namen des Dienstes sondern unter einem eigenen Produktnamen anbietet).

Letztendlich ist der Zweck dieses Verfahren,
a) Registrierten Endkunden (Clients) mit einem Guthabenkonto in Echtzeit Nutzungsgebühren für angeforderte und genutzte Dienste zu verrechnen, oder
b) Registrierten Endkunden regelmäßig (z.B. monatlich) eine einheitliche Gesamtrechnung für alle genutzten Services von unterschiedlichen Providern zu erstellen.

Mit dem Verfahren wird sichergestellt, dass
a) der Kunde nur das bezahlt, was er nutzt, und
b) der Diensterbringer für seine Leistungen bezahlt wird.

Daneben schafft dieses Verfahren die Voraussetzung dafür, dass dem Kunden als Option schon während der Dienstenutzung in Realzeit angezeigt werden kann, welche Gebühren für den Dienst aufgelaufen sind, bzw. bei Prepaid-Service, wieviel Guthaben noch vorhanden ist.

Grundlage dieser Lösung ist eine zuverlässige Vergebührungsfunktion, in die alle Partner-Komponenten (Client, Proxy / Application Broker, Application Server) während der Dienstenutzung eingebunden sind.
Client: Authentifiziert sich bei einem Proxy und fordert Dienst an.
Proxy / Application Broker: Vermittelt den angeforderten Dienst und stößt die Vergebührung auf dem Billing Server an. Billing Server: Führt Buch über die Nutzung dieses Dienstes durch den Client.
Application Server: Bietet Dienst an und informiert mit Tickets den Proxy über Zustandekommen und Verlauf der Servicebeziehung zwischen ihm und dem Client.

Die weitere Erläuterung der Erfindung wird durch eine Zeichnung unterstützt, die drei Abbildungen umfasst.

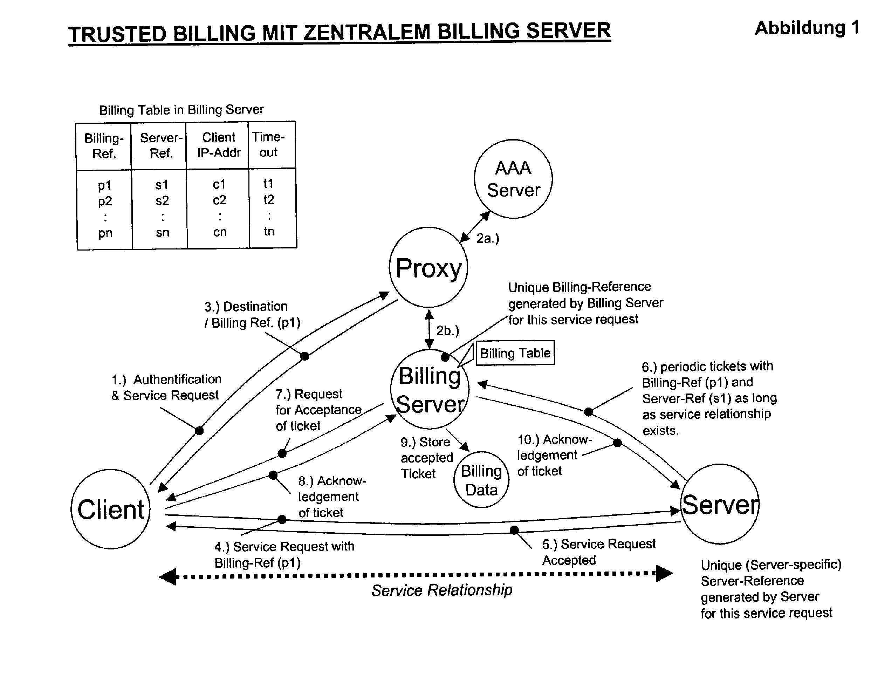

Abbildung 1 zeigt die Beziehungen der Partner untereinander und den prinzipiellen Ablauf von der Authentifizierung des Clients über die Dienstanforderung und Diensterbringung bis hin zur Vergebührung. Dieser Ablauf wird im folgenden anhand von Abbildung 1 beschrieben.
- Nachdem sich der Client mithilfe des Proxy bei dem Authentification-Authorization-Accounting-Server (AAA-Server) authentifiziert hat (1)/(2a), informiert der Proxy den Billingserver über den anstehenden Servicewunsch. Der Billingserver verwaltet die Billingtabelle und erzeugt dafür auch die Referenzen p1 pro Servicewunsch. Diese Referenz wird dann an den Proxy zurückgegeben (2b). Der Proxy übermittelt dann dem Client neben der Angabe, wo sich der Application Server befindet (Destination) und der Billing-Reference (p1) auch noch die Adresse des Billingservers (3). Im weiteren Verlauf des Services kommunizieren dann Client, Server und Billingserver unter Ausschluß des Proxy.
- Der Client fordert mit der Information, die er vom Proxy erhalten hat, beim Application Server den gewünschten Dienst an (4). Dieser bestätigt die Dienstanforderung an den Client (5). Hiermit ist die Servicebeziehung zwischen Client und Application Server eingerichtet.
- Nachdem die Servicebeziehung zwischen Client und Application Server aufgebaut worden ist, und solange der Dienst genutzt wird, erstellt der Application Server in regelmäßigen Abständen Tickets (z.B. 1 pro Minute), die an den Billing Server gesendet werden (6). Diese Tickets enthalten die Reference p1, die dem Billing Server erlaubt, effizient auf die Vergebührungstabelle (Billing-Tabelle) zuzugreifen, und die Reference s1, die der Server selbst erstellt hat, und mit welcher er gegebenenfalls später bei einer Rückmeldung vom Billing Server effizient auf seine Daten zugreifen und eine bestehende Service Relationship beenden kann.
- Nach Erhalt eines Tickets (6) ermittelt der Billing Server anhand der in dem Ticket enthaltenen Reference p1 den Client (IP-Adresse C1) und fordert von diesem für jedes empfangene Ticket eine Bestätigung dieser Vergebührungsdaten an (7). Falls nach einer bestimmten Zeit (z.B. 1 Sekunde) die Bestätigung nicht empfangen wurde, wird die Anforderung (7) ein- oder zweimal wiederholt.
- Nach Empfang der Bestätigungsanforderung verifiziert der Client das Ticket und sendet gegebenenfalls eine Bestätigung an den Billing Server (8).
- Nach Empfang einer Bestätigung vom Client speichert der Billing Server das Ticket zu einer späteren Rechnungserstellung ab (9) und informiert den Application Server, daß der Client das Ticket bestätigt hat. Im Falle eines Prepaid-Kunden aktualisiert der Billing Server den Guthabenstand des Kunden.

### Sonderfälle bei der beschriebenen Realisierungsvariante der Erfindung:

### - Prepaid-Kunde:

Wenn das Guthaben eine bestimmte Schwelle unterschreitet informiert der Billing Server den Client, daß das Guthaben fast aufgebraucht ist. Dies kann z.B. mit der nächsten Anforderung einer Bestätigung für ein Ticket erfolgen (7). Falls das Guthaben aufgebraucht ist, wird der Billing Server den Eintrag in der Billing Table löschen und weitere Tickets vom Application Server für diesen Kunden nicht mehr akzeptieren und diese Tickets dem Application Server negativ quittieren, woraufhin dieser die Servicebeziehung zum Client gegebenenfalls beenden wird.

### - Anforderung einer Ticketbestätigung (7) vom Client negativ quittiert:

Der Billing Server informiert den Application Server, daß ein Ticket negativ quittiert wurde, wobei er dem Application Server die Reference s1 zurückgibt. Anhand der Reference s1 ist der Server daraufhin in der Lage, die Servicebeziehung zum Client zu beenden.

### - Ticketbestätigung vom Client trotz mehrmaliger Anforderung nicht erhalten:

Der Billing Server informiert den Application Server, daß er für ein Ticket keine Quittung vom Client erhalten konnte, wobei er dem Application Server die Reference s1 zurückgibt. Anhand der Reference s1 ist der Server daraufhin in der Lage, die Servicebeziehung zum Client zu beenden.

### - Timer t1 für Billing Table Eintrag läuft ab.

Um die Gültigkeit eines Billig Table Eintrags zu sichern, überwacht der Billing Server den Eingang der Tickets vom Application Server. Sobald ein Ticket (6) eintrifft, wird der eingestellte Timer zurückgesetzt. Bei Ablauf des Timers wird der Eintrag in der Tabelle gelöscht. Eventuell nachfolgend eintreffende Tickets vom Server werden negativ quittiert.

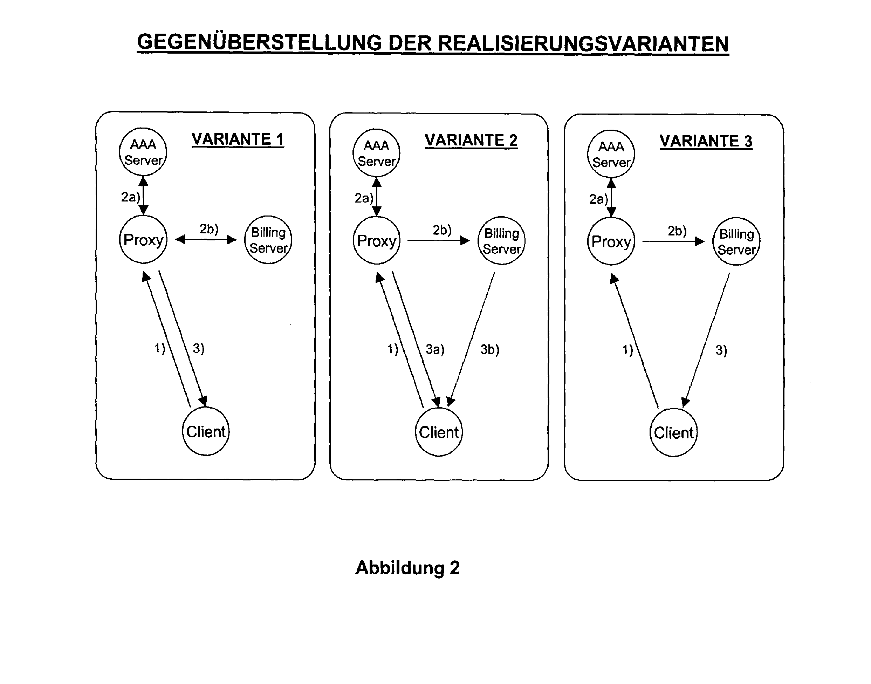

Ein Ausschnitt des Meldungsablaufes (1) - (3), der in Abbildung 1 dargestellt und bereits beschrieben ist, ist für verschiedene Realisierungsvarianten der Erfindung in Abbildung 2 dargestellt.
Realisierungsvariante 1: Die in Abbildung 1 beschriebene Variante.
Realisierungsvariante 2: Die Variante 2 unterscheidet sich von der Variante 1 insofern, daß der Proxy, nachdem der Billing Server von dem Verbindungswunsch informiert wurde, keine Billing Reference (p1) mehr vom Proxy erwartet, sondern die Antwort auf den Service Request vom Client ohne p1 an den Client zurücksendet (3a). Der Client erwartet stattdessen die Billing Reference vom Billing Server und wendet sich mit dem Service Request (4) an den Application Server erst dann, wenn er die Billing Reference in einer separaten Nachricht (3b) erhalten hat.
   Die Korrelation der Information in den Nachrichten 3a) und 3b) mit dem ursprünglichen Service Request (1) erfolgen über eine existierende eindeutige Reference (Call id, Tag), die vom Client für jeden Service Request generiert wird und in den Nachrichten 2b), 3a) und 3b) enthalten ist.
Realisierungsvariante 3: Die Variante 3 unterscheidet sich von der Variante 2 insofern, daß der Proxy in diesem Fall selbst keine Antwort auf den ursprünglichen Service Request (1) an den Client sendet. Nachdem der Billing Server vom Proxy mit allen relevanten Daten versorgt wurde (2b), generiert der Billing Server eine Billing Reference p1 und sendet sie gemeinsam mit den Daten, die er vom Proxy erhalten hat, als Antwort auf den Service Request (1) an den Client.

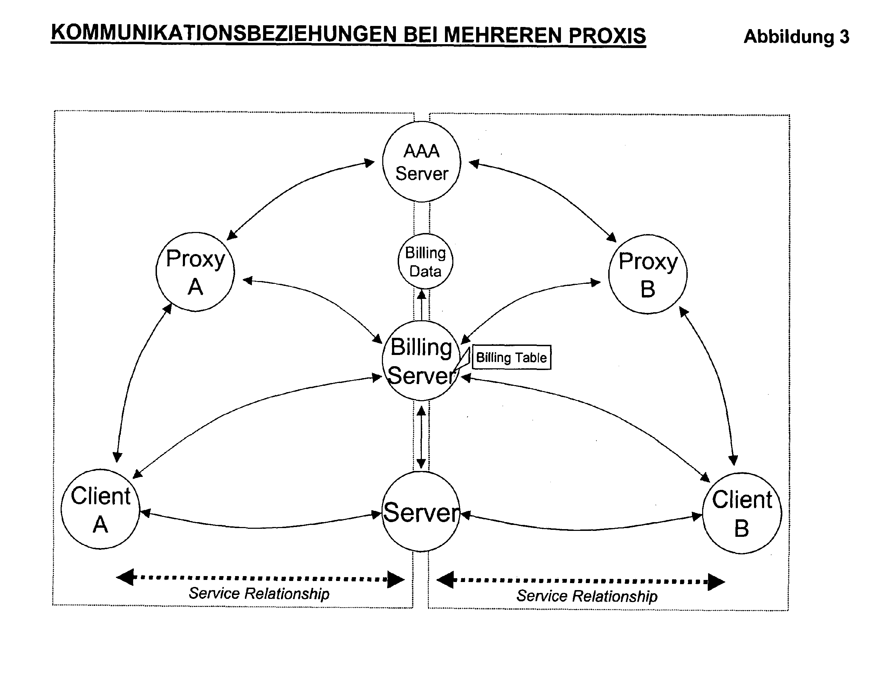

Abbildung 3 beschreibt die Einbindung des Billing Servers in das Kommunikationsnetz als Partner von mehreren Proxies. Sie zeigt eine prinzipielle Anordnung von Clients, Application Servers, Proxies und einem zentralen Billing Server.

Indem die Billingserver gegebenenfalls mit interner Redundanz ausgestattet werden und zusätzlich mehrere Billingserver gleichzeitig eingesetzt werden können, wird diese Realisierungsvariante hoch verfügbar und gleichzeitig hoch skalierbar (m Billingserver für n Proxies und z Application Server, m < n) .

### Bemerkungen:

- Zu beachten ist, daß dieses Verfahren nicht erfordert, dass Server und/oder Client sich bei Beendigung der Servicebeziehung beim Billing Server abmelden. So erfolgt auch die Versendung eines Vergebührungstickets an den Client immer im Voraus für das aktuelle Vergebührungsintervall. Damit ist sichergestellt, dass der Client nicht kostenpflichtige Dienste in Anspruch nimmt, ohne dass er dafür bezahlt, indem er vor Ablauf eines Vergebührungsintervalls einfach den Dienst abbricht, um zu verhindern, dass er für das vergangene Intervall vergebührt wird.
- Der Überwachungstimer t1 in der Billing Table muss auf jeden Fall größer als die Länge des Vergebührungsintervall sein, das zwischen Client und Application Server vereinbart wird. Es muss groß genug gewählt werden, um zu vermeiden, dass eine verloren gegangene (und deshalb vom Application Server wiederholte) Ticketnachricht an den Billing Server dazu führt, dass dieser den Billing Table Eintrag für ungültig erklärt. Gleichzeitig darf t1 aber nicht zu groß gewählt werden, um zu vermeiden, dass beispielsweise Denial-of-Service Attacken von böswilligen Clients zu einer Verknappung der Billing Table Resourcen und letztlich zu einer Nichtverfügbarkeit dieser Dienste führt. Ein vernünftiger Wert für t1 ist 2-3 Mal die Länge des Vergebührungsintervalls. Da die Länge der Vergebührungsintervalle der einzelnen Servicebeziehungen (siehe Abb. 1) unterschiedlich sein können, wird die Länge des Überwachungstimer t1 variabel gestaltet. Sobald der Billing Server ein Ticket vom Application Server erhält, verwendet er die darin angegebene Länge des Vergebührungsintervall und bestimmt daraus die Länge von t1, um den Empfang des nächsten Tickets vom Application Server für diese Servicebeziehung zu überwachen. Bis zum Empfang des ersten Tickets vom Application Server wird ein für die Billing Table einheitlicher fester Initialwert für diesen Timer verwendet (z.B. 5 Sekunden).
- Mögliche vertrauensbildende Maßnahmen zwischen Client und Application Server: Die Konditionen für die Servicebeziehung (Länge und Kosten des 1. Intervals, Länge und Kosten der Folgeintervalle) werden zwischen Client und Server vereinbart. Durch die Wahl eines kurzen 1. Intervalls und ggf. Sonderkonditionen dafür kann sichergestellt werden, daß auch im Falle einer Nichterbringung der Leistung (z.B. Serverausfall, Überlast, SW-Fehler, Inkompatibilität von Client und Serversoftware) trotz aufgebauter Servicebeziehung für den Dienstanwender kein oder nur ein geringer Nachteil entsteht
- Bei Ausfall des Billing Servers kann der Application Server aufgrund der ausbleibenden Quittung auf das Ticket die Servicebeziehung zum Client gegebenenfalls abbrechen.
- Bei Ausfall des Clients wird das Gebührenkonto des Kunden nicht fälschlicherweise weiter vom Billing Server belastet, da Client nicht mehr in der Lage ist, weitere Ticketbestätigungsanforderungen des Billing Servers zu quittieren (siehe Sonderfälle).
- Funktionalität beim Client erweiterbar z.B. um
   i. Kumulierung der vom Billing Server übermittelten Gebührennachrichten und Anzeige dieser Gebühren am Terminal zur Gebührenüberwachung in Realzeit.
   ii. Möglichkeit für Endbenutzer als Option Tickets manuell zurückzuweisen, z.B. bei Erreichen eines bestimmten selbstgesetzten Gebührenlimits.

Zusammenfassend kann folgendes gesagt werden. Das beschriebene Verfahren erlaubt dem Betreiber eines Stateless Proxy bzw. Application Brokers auf einfache Art und Weise mittels eines Billing Servers registrierten Application Service Anbietern und registrierten Kunden eine zuverlässige, in definierbaren Intervallen genaue und vertrauenswürdige Vergebührungsfunktion anzubieten, indem sich während der Diensterbringung Client und Server ständig im Hintergrund in regelmäßigen Abständen über einen unabhängigen Dritten (Billing Server) über die dafür anfallenden Gebühren verständigen und die Vergebührungsfunktion auch von dem unabhängigen Dritten erbracht wird, wobei die Vergebührungsfunktion auf dem Billing Server insbesondere für mehrere Proxies gleichzeitig erbracht werden kann.

### Anwendungsbeispiele

- Auskunftsdienste
- Videodienste
- Telefonzusatzdienste, wie z.B. Konferenzen über Konferenzserver
- Mailboxabfragen
- anonymes Billing für Gateways, die aus dem offenen Internet angesteuert werden

## Patentansprüche

1. Billingeinrichtung in einem Kommunikationsnetz, die
a) eine von einem Client initiierte Dienstanforderung von einer Dienstvermittlungseinrichtung empfängt,
b) für den Client bezüglich der Dienstanforderung eine Billing-Reference erzeugt, die der Client in einer nachfolgenden Dienstanforderung gegenüber einem Application Server angeben muß,
c) von dem genannten Application Server erstellte Vergebührung-Tickets empfängt, wobei die Tickets Informationen hinsichtich der vor bzw. während der Dienstnutzung für einen Dienstnutzer fällig werdenden Gebühren enthalten,
d) bezüglich eines vom Application Server empfangenen Tickets jeweils eine Bestätigungsanfrage an den Client des Dienstnutzers richtet,
e) für das Ticket eine Gebührenregistrierungsaktion durchführt, falls sie von dem Client eine Bestätigung für das genannte Ticket empfängt.

2. Billingeinrichtung nach Anspruch 1,
**dadurch gekennzeichnet,**
**dass** sie die genannte Billing-Reference an die genannte Dienstvermittlungseinrichtung sendet, die die Information dann dem Client mitteilt.

3. Billingeinrichtung nach Anspruch 1,
**dadurch gekennzeichnet,**
**dass** sie die für einen Client erzeugte Billing-Reference dem Client direkt zusendet.

4. Billingeinrichtung nach einem der Ansprüche 1 bis 3,
**dadurch gekennzeichnet,**
**dass** die genannte Gebührenregistrierungsaktion für einen Prepaid-Client und einen Rechnungs-Client gleichermaßen durchführt.

5. Billingeinrichtung nach einem der Ansprüche 1 bis 4,
**dadurch gekennzeichnet,**
**dass** die genannte Gebührenregistrierungsaktion darin besteht, dass sie das Ticket zu einer späteren Rechungserstellung abspeichert.

6. Billingeinrichtung nach einem der Ansprüche 1 bis 5,
**dadurch gekennzeichnet,**
**dass** die genannte Gebührenregistrierungsaktion darin besteht, dass sie den Guthabenstand oder Gebührenstand des Client aktualisiert.

7. Billingeinrichtung nach Anspruch 6,
**dadurch gekennzeichnet,**
**dass**
sie den Client informiert, falls der Guthabenstand eine bestimmte Schwelle erreicht bzw. unterschreitet,
a) sie den Application Server informiert, falls kein ausreichendes Guthaben mehr vorhanden ist.

8. Billingeinrichtung nach einem der Ansprüche 1 bis 7
**dadurch gekennzeichnet,**
**dass** sie dem Client die für die Gebührenregistrierungsaktion herangezogene Gebühr mitteilt.

9. Billingeinrichtung nach einem der Ansprüche 1 bis 8
**dadurch gekennzeichnet,**
**dass** sie Dienstanforderungen von einer oder mehreren Dienstvermittlungseinrichtungen empfängt und bearbeitet.

10. Application Server, der
a) von einem Client eine Dienstanforderung empfängt, wobei die Dienstanforderung eine Reference auf eine Billingeinrichtung enthält,
b) bezüglich des Dienstes Vergebührungs-Tickets erstellt und diese an die Billingeinrichtung sendet, wenn er den Service-Request annimmt, wobei die Tickets Informationen hinsichtich der vor bzw. während der Durchführung des Dienstes für den Client fällig werdenden Gebühren enthalten,
c) von der Billingeinrichtung Mitteilungen darüber empfängt, ob die Tickets durch den Client bestätigt werden,
d) die Durchführung des Dienstes aufrechterhält, solange die Tickets durch den Client positiv bestätigt werden.

11. Application Server nach Anspruch 10,
**dadurch gekennzeichnet,**
**dass** er die Servicebeziehung zum Client beendet, wenn er von der Billingeinrichtung die Mitteilung empfängt, daß der Client eine Bestätigungsanfrage bezüglich eines Tickets negativ quittiert hat.

12. Application Server nach Anspruch 10,
**dadurch gekennzeichnet,**
**dass** er die Servicebeziehung zum Client beendet, wenn er von der Billingeinrichtung die Mitteilung empfängt, daß der Client eine Bestätigungsanfrage bzw. mehrere Bestätigungsanfragen bezüglich eines Tickets überhaupt nicht quittiert hat.

13. Application Server nach Anspruch 10,
**dadurch gekennzeichnet,**
**dass** er die Servicebeziehung zum Client beendet, wenn er von der Billingeinrichtung überhaupt keine Quittung auf das von ihm generierte Ticket erhält.

14. Application Server nach Anspruch 10,
**dadurch gekennzeichnet,**
**dass** er die Servicebeziehung zum Client beendet, wenn er von der Billingeinrichtung im Falle eines Prepaid-Nutzers bezüglich eines Tickets die Mitteilung erhält, daß kein ausreichendes Guthaben mehr vorhanden ist.

15. Client, der
a) an eine Dienstvermittlungseinrichtung eine Dienstanforderung stellt,
b) nach einer erfolgreichen Authentifizierung der Dienstanforderung eine Reference auf den angeforderten Dienst empfängt,
c) anhand der genannten Reference eine Servicebeziehung zu einem Application Server des angeforderten Dienstes aufbaut,
d) von einer Billingeinrichtung Bestätigungsanfragen über hinsichtlich des Dienstes fällig werdende Gebühren empfängt,
e) die genannten Bestätigungsanfragen gegenüber der Billingeinrichtung verifiziert und beanwortet.

16. Client nach Anspruch 15,
**dadurch gekennzeichnet,**
**dass** er die von der Billingeinrichtung mithilfe der Bestätigungsanfragen übermittelten Gebührennachrichten kumuliert und diese Gebühren dem Endnutzer zur Gebührenüberwachung in Realzeit anzeigt.

17. Verfahren zur Vergebührung eines Dienstes in einem Kommunikationsnetz, demgemäß
a) von einem Client an eine Dienstvermittlungseinrichtung eine Dienstanforderung gestellt wird,
b) daraufhin mithilfe der Dienstvermittlungseinrichtung eine Authentifizierung des Clients durchgeführt wird,
c) nach einer erfolgreichen Authentifizierung durch die Dienstvermittlungseinrichtung einer Billingeinrichtung die Dienstanforderung mitgeteilt wird,
d) von der Billingeinrichtung für die Dienstanforderung eine Billing-Reference erzeugt wird,
e) dem Client eine Reference auf die genannte Billing-Reference und eine Reference auf die Billingeinrichtung mitgeteilt wird,
f) von dem Client anhand der genannten Dienst-Reference eine Servicebeziehung zu einem Application Server des angeforderten Dienstes aufgebaut wird und dem Application Server die Billing-Reference sowie die Reference auf die Billingeinrichtung mitgeteilt wird,
g) von dem Application Server Tickets erstellt und an die Billingeinrichtung gesendet werden, wobei die Tickets Informationen hinsichtich der vor bzw. während der Dienstnutzung anfallenden Gebühren enthalten,
h) von der Billingeinrichtung bezüglich eines Tickets jeweils eine Bestätigungsanfrage an den Client gerichtet wird,
i) das Ticket von der Billingeinrichtung zu einer Gebührenregistrierungsaktion herangezogen wird, falls das Ticket bestätigt wird.

18. Verfahren nach Anspruch 17,
**dadurch gekennzeichnet,**
**dass**
a) das Ergebnis der genannten Bestätigungsanfrage von der Billingeinrichtung an den Application Server weitergeleitet wird,
b) die Durchführung des Dienstes seitens des Application Servers aufrechterhalten wird, solange die Tickets durch den Client positiv bestätigt werden.
